(19) Europäisches Patentamt
European Patent Office
Office européen des brevets

(11) EP 2 120 018 A1

(12) **EUROPEAN PATENT APPLICATION**

(43) Date of publication:
**18.11.2009 Bulletin 2009/47**

(51) Int Cl.:
*G01D 5/347* *(2006.01)*

(21) Application number: **08156204.3**

(22) Date of filing: **14.05.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(71) Applicant: **Nederlandse Organisatie voor
toegepast-natuurwetenschappelijk onderzoek
TNO
2628 VK Delft (NL)**

(72) Inventor: **Snel, Robert
2627 BV Delft (NL)**

(74) Representative: **Hatzmann, Martin
Vereenigde
Johan de Wittlaan 7
2517 JR Den Haag (NL)**

(54) **Measuring system for measuring the rotational displacement.**

(57)   Measuring system for measuring the rotational displacement of a shaft (1) which comprises or is connected to a cylindrical reference section (2) which is provided with reference signs (3) at its outer surface. The system, moreover, comprises an electro-optical detector (4), facing said reference signs. A correction lens (5) is provided between the reference section and the detector, the correction lens being arranged to correct the defocus effects of the detector due to the curvature of the reference section. Where the detector has a mainly flat detection surface facing the reference signs of the reference section, the correction lens can have a hollow cylindrical surface facing the reference section of the shaft, the radius of which matches the shaft radius r plus the size of an intermediate air gap, according to the formula $(r + \text{air gap})^2 = x^2 + y^2$. The local thickness d of the correction lens can be approximated by the formula $d = (r - \sqrt{(r^2 - x^2)}) / (n_2 - n_1)$, where $n_1$ is the refractive index of the material of the environment of the measuring system, e.g. air, and where $n_2$ is the refractive index of the material of the correction lens.

FIG. 1$^a$

EP 2 120 018 A1

# FIG. 1$^b$

**Description**

The present invention relates to a displacement or movement measuring system such as employed e.g. at machine tools, for the continuous digital display of the position or setting of a component of such machine or device, which component can be forwardly and rearwardly displaced in rotation about an axis.

Basically two types of automatic displacement or movement measuring devices are known to the art. In the first type, the position of the component is measured and eventually indicated in the form of a so-called absolute value which is independent of what has previously occurred and is deduced according to a code from readings taken at a multiplicity of binary coded tracks of a scale carrier, for instance with photoelectric reading means. This absolute value of the position is in fact equivalent to the displacement of the component from a reference position.

A second class or type of automatic displacement measuring devices have become known to the art under the general designation of "increment-counter systems". In such systems a stationary reading means cooperates with a single increment-bearing track, i.e. a single scale track uniformly divided with the desired fineness into graduation units of equal magnitude, the scale track being located at a scale carrier affixed to the component displaceable in linear or angular motion. The reading means is operatively associated with electrical circuits in order to properly count, with regard to the direction of motion, each traversing of a graduation unit of the increment scale in front of the reading means and at any instance in time to deliver as a measurement value the algebraic sum of the counted graduation units (plus and minus signs being assigned to each direction of motion, respectively). Under the precondition that counting occurs free of error, the algebraic sum of the counted graduation units then corresponds to the desired absolute value of position, assuming a starting position of the scale carrier has been defined and associated with a predetermined absolute value, preferably zero.

An exemplary embodiment of such type incremental measurement system has been disclosed in Swiss patent 499,091. There are provided scale-carrier disks each having a circular-shaped graduation track of 50,000 periods of graduation units, each of which consist of a pair of strips which are respectively opaque and transparent. Each strip possesses the width of one-half of a graduation unit.

The graduation tracks are displaced relative to one another in order to possess a certain mutual eccentricity. This prior art increment-measuring device or system also comprises stationary photoelectric reading means, each embodying a respective illumination mechanism and, for instance, three photocells as well as electrical circuits for processing the photocell currents. The reading means are associated with further electrical circuits in order to properly count, with respect to the direction of motion, the moiré fringes resulting from the common illumination and the cooperation of both graduation tracks. It is a property of such moiré fringes that they form a pattern of light and dark fringes having a period much larger than the period of the pattern-generating graduation tracks, thus allowing the reading means to be of larger dimension. The three photocell currents of each reading means are combined into a three-phase current system from which there can be derived a multi-phase (for instance a two-phase) binary signal system which is periodic in graduation units of the graduation tracks, and the periods of which can be counted rapidly, sign-correct, and free of any disturbance in a counter.

Another embodiment of such type incremental measuring system has been disclosed in U.S. Pat. No. 3,591,841 (Heitmann et al.), wherein at least one increment-scale track supported at a movable scale carrier is associated firstly with a photoelectric reading means comprising a plurality of sensing fields and secondly with a stationary graduation carrier having unequally spaced respective opaque and transparent portions. The cooperation of the stationary graduation carrier with the plurality of sensing fields and the increment-scale track results in a coded output of the reading means delivering the displacement magnitude as well as the displacement direction of the increment scale. In this state-of-the-art system the absolute value of the scale-carrier position is evaluated by means of a plurality of additional binary code tracks delivering a coarse digital indication implementing the increment-scale reading. Such an arrangement requires a plurality of binary code-reading means in addition to at least one increment-reading means. Furthermore, the overall precision of the increment-reading cannot be enhanced by use of the moiré technique, the latter being incompatible with the increment-scale reading system as disclosed; accordingly, the reading accuracy is limited to the order of magnitude of the grating accuracy of the finest increment-scale track.

In the prior art systems shaft rotations are measured by using measuring disks, flanges or drums connected to the shaft to be monitored, provided with optical reference signs like bars, holes gratings etc. on one side and an optical/electrical detector facing such measuring disk, flange or drum. Besides disk and flanges perpendicular on the shaft axe, drums may be used, however, only drums having a rather large diameter, e.g. 30 centimetres. When using smaller drums, measurement errors will occur due to the smaller radius of curvature versus the (flat) detector surface, in other words by the increasing influence of the defocus effects of the detector.

One aim of the present invention is to enable that said reference signs can be provided directly on smaller measurement drums or even directly on the surface of the shaft the rotation of which has to be measured.

According to the invention, in a measuring system for measuring the rotational displacement of a shaft which comprises or is connected to a cylindrical reference section which is provided with reference signs at its outer surface,

the system, moreover, comprising an electro-optical detector, facing said reference signs, a correction lens is provided between the reference section and the detector, which correction lens is arranged to correct the defocus effects of the detector due to the curvature of the reference section.

By providing such a correction lens between the cylindrical reference section - which may have the same diameter as the remaining shaft or which may have another diameter - and thus compensate the differences in transit time of the light from the shaft (i.e. its reference signs) to the detector in the central area vs. in the edge areas, less measurement errors and higher accuracy can be obtained by the measurement system according to the invention.

Although the exact shape of the correction lens can only be computed by using an appropriate computer program and inputting the exact dimensions of the reference section of the shaft, the size of the air gap, the exact shape of the detector surface and other parameters, like e.g. the refractive index of the lens material, when the detector e.g. has a mainly flat detection surface facing the reference signs of the reference section, the correction lens may have a mainly hollow cylindrical surface facing the reference section of the shaft, the radius of which matches the shaft radius r plus the size of an intermediate air gap, according to the formula $(r + \text{air gap})^2 = x^2 + y^2$. In that case the local thickness d of the correction lens may be a more or less rough approximation of the formula $d = (r - -\sqrt{(r^2 - x^2)}) / (n_2 - n_1)$, where $n_1$ is the refractive index of the material of the environment of the measuring system, e.g. air, and where $n_2$ is the refractive index of the material of the correction lens.

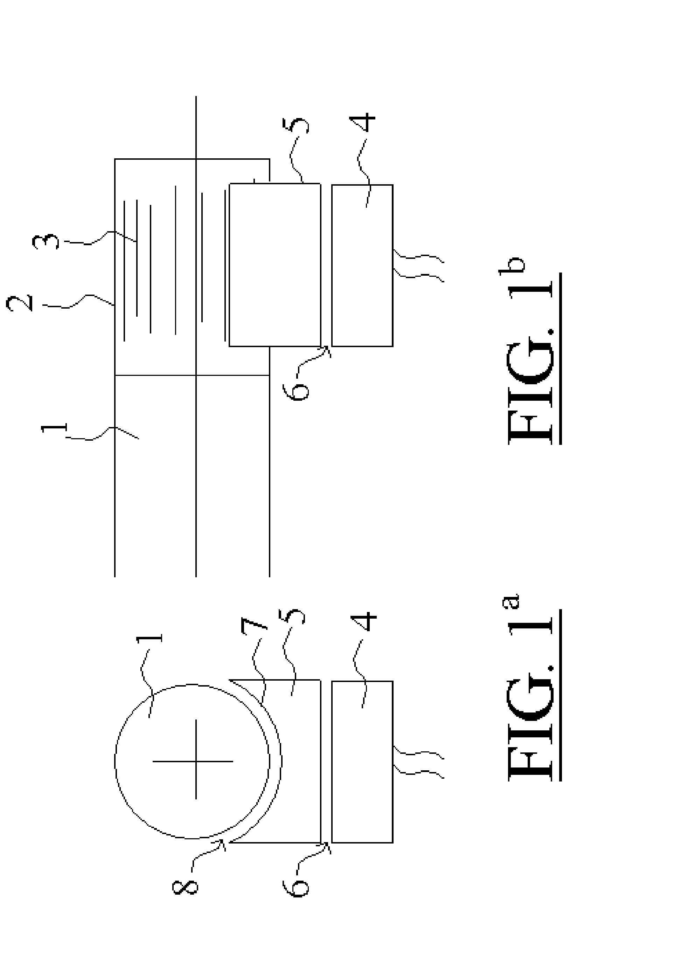

Figure 1 shows - in two views 1a and 1b - schematically an exemplary embodiment of the measuring system according to the invention, which is arranged for measuring the rotational displacement of a shaft 1 which comprises a cylindrical reference section 2 which is provided with reference signs 3 at its outer surface. The system, moreover, comprises an electro-optical detector 4, facing said reference signs. A correction lens 5 is provided between the reference section 2 and the detector 4, the correction lens 5 being arranged - and shaped by means of appropriate computer software - to correct the defocus effects of the detector due to the curvature of the reference section and the resulting differences in light transit time. In figure 1 the detector 4 has a mainly flat detection surface 6 facing the reference signs 3 of the reference section 2. The correction lens 5 has a hollow cylindrical surface 7 facing the reference section 2 of the shaft 1, the radius of which matches the shaft radius r plus the size of an intermediate air gap 8, according to the formula $(r + \text{air gap})^2 = x^2 + y^2$ (Note: this is the 2D formula for the cross-section of the inner cylinder part of the correction lens; this note is valid for next formula as well). The local thickness d of the correction lens can be approached by the formula $d = (r - -\sqrt{(r^2 - x^2)}) / (n_2 - n_1)$, where $n_1$ is the refractive index of the material of the environment of the measuring system, e.g. air, and where $n_2$ is the refractive index of the material of the correction lens.

**Claims**

1.    Measuring system for measuring the rotational displacement of a shaft (1) which comprises or is connected to a cylindrical reference section (2) which is provided with reference signs (3) at its outer surface; the system, moreover, comprising an electro-optical detector (4), facing said reference signs; a correction lens (5) being provided between the reference section and the detector, the correction lens being arranged to correct the defocus effects of the detector due to the curvature of the reference section.

2.    Measuring system according to claim 1, where the detector has a mainly flat detection surface facing the reference signs of the reference section, the correction lens having a hollow cylindrical surface facing the reference section of the shaft, the radius of which matches the shaft radius r plus the size of an intermediate air gap, according to the formula

$$(r + \text{air gap})^2 = x^2 + y^2 \qquad (1),$$

and the local thickness d of the correction lens being an approximation of the formula

$$d = (r - \sqrt{(r^2 - x^2)}) / (n_2 - n_1) \qquad (2)$$

where $n_1$ is the refractive index of the material of the environment of the measuring system, e.g. air, and where $n_2$ is the refractive index of the material of the correction lens.

EP 2 120 018 A1

FIG. 1$^a$       FIG. 1$^b$

Europäisches
Patentamt

European
Patent Office

Office européen
des brevets

# EUROPEAN SEARCH REPORT

Application Number

EP 08 15 6204

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 11 295106 A (MAEKAWA SEISAKUSHO KK) 29 October 1999 (1999-10-29) * abstract * ----- | 1 | INV. G01D5/347 |
| X | DE 38 18 218 A1 (HEIDENHAIN GMBH DR JOHANNES [DE]) 26 October 1989 (1989-10-26) * the whole document * ----- | 1 | |

TECHNICAL FIELDS
SEARCHED      (IPC)

G01D

The present search report has been drawn up for all claims

| Place of search | Date of completion of the search | Examiner |
|---|---|---|
| Munich | 26 November 2008 | Kallinger, Christian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 08 15 6204

This annex lists the patent family members relating to the patent documents cited in the above-mentioned European search report.
The members are as contained in the European Patent Office EDP file on
The European Patent Office is in no way liable for these particulars which are merely given for the purpose of information.

26-11-2008

| Patent document cited in search report | | Publication date | Patent family member(s) | | Publication date |
|---|---|---|---|---|---|
| JP 11295106 | A | 29-10-1999 | NONE | | |
| DE 3818218 | A1 | 26-10-1989 | EP | 0345414 A1 | 13-12-1989 |
| | | | ES | 2027046 T3 | 16-05-1992 |
| | | | JP | 1316610 A | 21-12-1989 |
| | | | JP | 2610680 B2 | 14-05-1997 |
| | | | US | 4987302 A | 22-01-1991 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- SE 499091

- US 3591841 A, Heitmann